Europäisches Patentamt

European Patent Office

Office européen des brevets

(19)

(11) Numéro de publication : **0 054 456**
**B1**

(12) **FASCICULE DE BREVET EUROPÉEN**

(45) Date de publication du fascicule du brevet :
28.08.85

(21) Numéro de dépôt : **81401847.9**

(22) Date de dépôt : **20.11.81**

(51) Int. Cl.⁴ : **H 02 G  3/04**

(54) **Dispositif de raidissement amovible pour chemins de câbles ou goulottes destinés à contenir des conducteurs électriques.**

(30) Priorité : **21.11.80 ES 254577**

(43) Date de publication de la demande :
**23.06.82 Bulletin 82/25**

(45) Mention de la délivrance du brevet :
**28.08.85 Bulletin 85/35**

(84) Etats contractants désignés :
**AT BE CH DE FR GB IT LI LU NL SE**

(56) Documents cités :
**DE-A-  2 804 419**
**FR-A-  2 387 407**
**FR-A-  2 401 376**
**GB-A-   911 916**

(73) Titulaire : **APARELLAJE ELECTRICO, S.A.**
**Numancia 68**
**Barcelona (ES)**

(72) Inventeur : **Vilanova Bosch, José**
**Rocafort 244 8o, 7a.**
**Barcelona (ES)**

(74) Mandataire : **Picard, Jean-Claude Georges et al**
**Cabinet Plasseraud 84, rue d'Amsterdam**
**F-75009 Paris (FR)**

EP 0 054 456 B1

Jouve, 18, rue St-Denis, 75001 Paris, France

## Description

La présente invention concerne un dispositif de raidissement amovible pour chemins de câbles ou goulottes destinés à contenir des conducteurs électriques, en particulier pour les goulottes constituées par un profilé en forme de canal et fermées par un couvercle amovible, les bords intérieurs des deux parois latérales de ce canal présentant des éléments tubulaires sur lesquels sont ménagées des ouvertures ou entailles disposées de distance en distance, ces entailles étant destinées à recevoir par encliquetage des saillies latérales prévues en bout sur des entretoises pontant la goulotte, c'est-à-dire s'étendant, juste en dessous de son couvercle, entre les deux bords latéraux de celle-ci pour en maintenir l'écartement, lesdites entretoises étant constituées d'une pièce profilée déformable élastiquement et de forme générale allongée.

Par le document FR-A-2 401 376, on connaît déjà des dispositifs de raidissement amovibles d'un type analogue, mais leur inconvénient essentiel réside dans le fait que lesdites saillies latérales qui sont destinées à s'encliqueter dans les entailles ou analogues des parois latérales de la goulotte sont portées par des pattes forcément assez fragiles du fait de leurs faibles dimensions, pattes qui sont soumises à des efforts importants, puisque c'est uniquement par elles que passent les efforts que doit supporter l'entretoise pour maintenir dans toutes conditions la rigidité de la goulotte.

Le document FR-A-2 387 407 décrit encore un autre type de dispositif de raidissement présentant le même type d'inconvénient.

Le but de la présente invention est essentiellement d'éviter les inconvénients des dispositifs connus et, à cet effet, un dispositif de raidissement amovible selon la présente invention, du type général mentionné au début, est essentiellement caractérisé en ce que ladite pièce profilée a une base relativement plane et porte à proximité de chacune de ses extrémités, d'une part une paire d'ailettes latérales se faisant face et s'étendant pratiquement à angle droit par rapport au plan général de l'entretoise, d'un seul côté par rapport à ce plan, et d'autre part deux pattes, en bout d'entretoise, situées dans le prolongement l'une de l'autre et portant extérieurement lesdites saillies, lesquelles s'étendent globalement dans une direction perpendiculaire aux plans desdites ailettes, chaque ailette latérale de l'entretoise étant séparée de la patte adjacente par une encoche propre à chevaucher le bord extérieur de l'entaille correspondante du bord latéral de la goulotte lorsque sa patte et sa saillie y sont introduites, l'extrémité de l'ailette bordant cette encoche constituant ainsi butée sur la goulotte.

Grâce à cette disposition générale de l'invention, on conçoit qu'un pincement, par exemple entre le pouce et l'index, des deux ailettes latérales d'une des extrémités de l'entretoise permettra d'obtenir une flexion de cette extrémité selon un axe longitudinal, pour en réduire notablement la largeur, ce qui permettra d'introduire les saillies desdites pattes dans les encoches, lumières ou entailles pratiquées sur le dessus des bords latéraux de la goulotte, un relâchement desdites ailettes permettant un retour élastique de cette extrémité d'entretoise à la position de repos, pour laquelle lesdites saillies resteront accrochées dans lesdites entailles.

Les mêmes opérations pour l'autre extrémité d'entretoise permettront de terminer l'assujettissement complet de celle-ci sur les bords latéraux de la goulotte, et les opérations inverses permettront d'extraire l'entretoise si nécessaire ; cette entretoise est donc parfaitement amovible.

Grâce à l'invention, les efforts qui s'exercent sur l'entretoise et qui apparaissent lorsque l'écartement des bords latéraux de la goulotte risque d'être modifié, passent pour la majeure partie par lesdites ailettes latérales, dont les extrémités extérieures viennent buter sur la goulotte, les pattes situées en bout d'entretoise et qui portent lesdites saillies, pattes dont les dimensions sont forcément relativement limitées, n'ayant alors essentiellement qu'une fonction d'encliquetage et ne pouvant subir, le cas échéant, que des efforts beaucoup moins importants que ceux qu'encaissent lesdites ailettes.

Pour faciliter la flexion de l'extrémité d'entretoise selon un axe longitudinal, on pourra prévoir en outre qu'entre lesdites ailettes latérales, l'entretoise présente dans sa base une zone d'affaiblissement facilitant le pliage ou flexion de cette extrémité selon un axe longitudinal, sous l'effet d'un pincement desdites ailettes.

On peut prévoir à cet effet, par exemple, que cette zone d'affaiblissement est constituée par un amincissement localisé de ladite base de l'entretoise ou encore que cette zone d'affaiblissement est obtenue par des trous traversant la base de l'entretoise.

Des modes d'exécution de l'invention vont maintenant être décrits à titre d'exemples nullement limitatifs, avec référence aux figures du dessin annexé dans lequel :

la figure 1 est une vue schématique en bout d'une entretoise conforme à la présente invention, à l'état libre ;

la figure 2 est une vue analogue, mais montrant l'extrémité de l'entretoise pliée selon un axe longitudinal, lorsqu'un pincement est exercé sur les deux ailettes latérales correspondantes ;

la figure 3 est une vue en bout plus détaillée de l'entretoise de la figure 1 ;

la figure 4 est une vue de côté de l'entretoise partiellement en élévation et partiellement en coupe ;

la figure 5 est une vue en plan de dessus de l'entretoise de la figure 4 ;

la figure 6 est une vue en plan de dessous de l'entretoise de la figure 4 ;

la figure 7 est une vue partielle en perspective d'un chemin de câbles ou goulotte, à cloison médiane, équipée de dispositifs de raidissement conformes à la présente invention (on a montré d'une part deux entretroises courtes s'étendant entre la cloison médiane et les parois latérales de la goulotte, et d'autre part une entretoise longue s'étendant directement entre les deux parois latérales de cette goulotte) ; et

la figure 8 est une vue partielle en coupe à plus grande échelle, montrant la façon dont coopèrent les pattes des extrémités d'entretoises avec les entailles des bords d'une goulotte.

Le dispositif de raidissement objet de la présente invention consiste essentiellement en une entretoise en forme de pièce profilée rigide 1, de forme générale plane et allongée, obtenue par exemple par moulage de matière plastique, et comprenant une base rectangulaire plane 2 munie d'ailettes latérales 3 proches des deux extrémités et formant pratiquement un angle droit à la base 2, ainsi que de deux pattes 4 à chaque extrémité, qui forment avec cette base un angle légèrement supérieur à l'angle droit. Les ailettes latérales 3 ont un rebord en saillie 5, alors que les pattes d'extrémité 4 se terminent par un bord aigu 6 et possèdent une saillie en forme de téton latéral 7. En outre, lesdites ailettes latérales 3 sont séparées des pattes adjacentes 4 par une encoche 8.

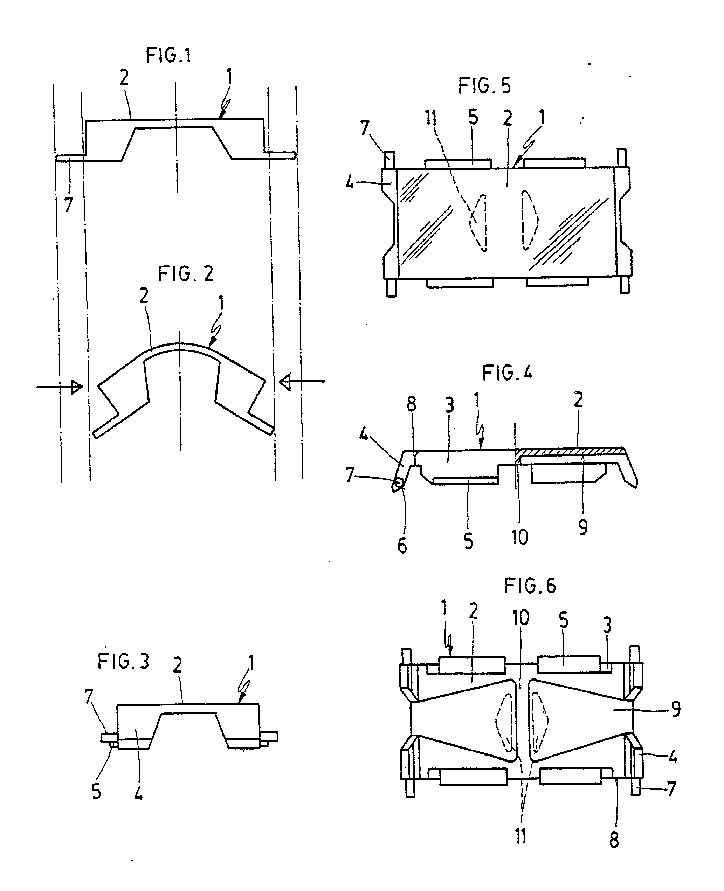

Les entretoises 1 présentent, à proximité de leurs deux extrémités, des parties affaiblies. Ces parties sont obtenues par la diminution de l'épaisseur de la base 2 dans des zones 9, comme le montrent les figures 4 et 6, avec une zone intermédiaire 10 d'épaisseur normale ou bien encore au moyen d'ouvertures traversantes ou trous 11 (figure 5).

Les entretoises 1 sont utilisées sur des chemins de câbles ou goulottes 12 destinés à contenir et à guider des conducteurs électriques, ces goulottes comprenant une base 13, des parois latérales 14 et, en option, une cloison longitudinale intermédiaire 15, avec ou sans symétrie. Les parois latérales 14 ont un rebord tubulaire intérieur 16 et, facultativement, une ailette extérieure 17 pour la fixation d'un couvercle. Quand elle existe, cette cloison intermédiaire 15 possède également des rebords tubulaires 16. Lesdits rebords tubulaires 16 comportent des entailles ou lumières supérieures 18 prévues pour l'encliquetage des pattes 4 des extrémités des entretoises 1.

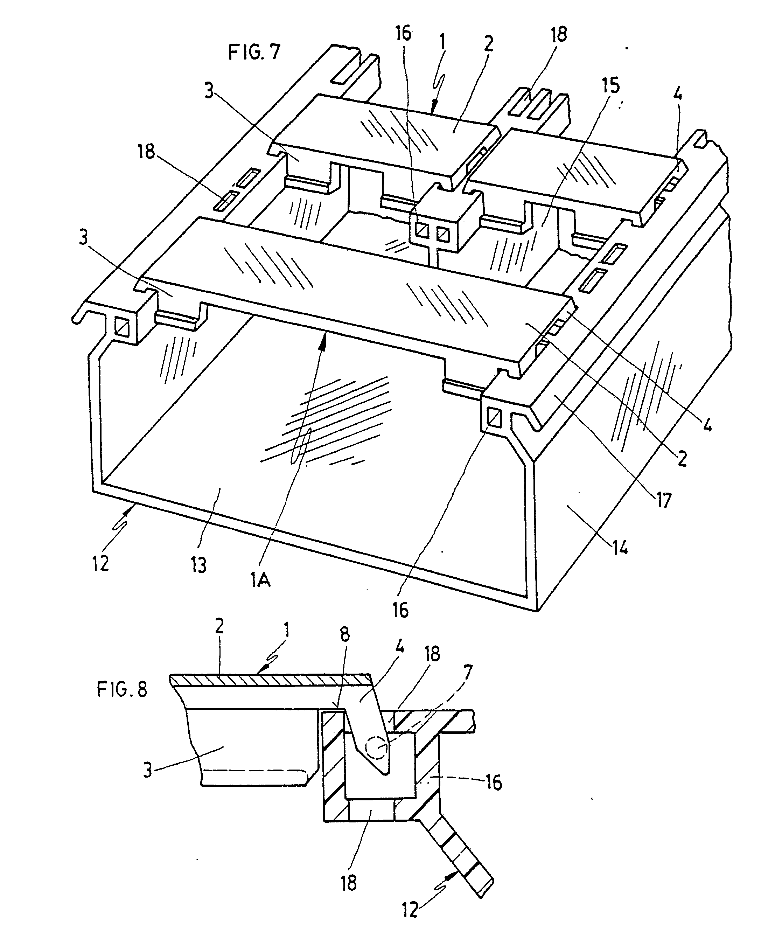

Les entretoises 1 sont disposées entre les parois latérales 14 dans les conduites moins larges, ou bien entre la paroi latérale 14 et la cloison intermédiaire 15 dans les conduites plus larges. Comme le montre la figure 7, dans les conduites plus larges on place entre les parois latérales 14 des entretoises 1A plus longues, passant par-dessus d'éventuelles cloisons intermédiaires non munies de rebords tubulaires 16.

Une particularité desdites entretoises 1 et 1A réside dans le fait qu'elles présentent une certaine marge d'élasticité, qui se révèle quand on leur applique un effort de compression par pincement des deux ailettes 3 à une extrémité (figure 2), ce qui peut être obtenu, sans gauchissement de l'entretoise, grâce à l'existence des zones affaiblies 9 ou 11 précédemment mentionnées. Cette compression se traduit par une courbure transversale de la pièce, qui diminue sa largeur et permet que les saillies latérales 7 puissent pénétrer dans les entailles 18 des rebords tubulaires 16 de la goulotte 12. Quand on cesse d'exercer ladite pression manuelle sur les ailettes 3, l'entretoise 1 ou 1A revient à sa position plane stable, et lesdites saillies 7 s'écartent dans les entailles des rebords tubulaires 16 et assurent ainsi la fixation de l'entretoise sur la goulotte 12. Inversement, pour extraire les entretoises 1 ou 1A, on exerce la même pression que ci-dessus pour obtenir les mêmes résultats, et permettre le passage des saillies 7 vers l'extérieur.

Quand on place une entretoise 1 ou 1A sur une goulotte 12, les encoches 8 permettent l'entrée du flanc extérieur du rebord tubulaire 16. Grâce à cette disposition, les flancs des rebords tubulaires 16 viennent buter sur les extrémités des paires d'ailettes 3, ce qui assure un assemblage complet et solide de l'entretoise sur la goulotte correspondante, tout en rigidifiant cette dernière et en évitant que les pattes 4, qui sont fragiles, puissent subir des efforts de flexion importants.

Dans ces conditions, les goulottes 12 sont exemptes des déformations ou gauchissements pouvant être provoqués par un détachement accidentel des entretoises 1 ou 1A, ce qui leur permet d'assurer convenablement et en toutes circonstances le maintien des câbles qui y sont logés. On réalise en même temps les conditions permettant d'assurer une manipulation facile et rapide pour le montage et l'extraction des entretoises 1 et 1A.

## Revendications

1. Dispositif de raidissement amovible pour chemins de câbles ou goulottes destinés à contenir des conducteurs électriques, en particulier pour les goulottes constituées par un profilé en forme de canal et fermées par un couvercle amovible, les bords intérieurs des deux parois latérales (14) de ce canal (12) présentant des éléments tubulaires (16) sur lesquels sont ménagées des ouvertures ou entailles (18) disposées de distance en distance, ces entailles étant destinées à recevoir par encliquetage des saillies latérales (7) prévues en bout sur des entretoises (1) pontant la goulotte, c'est-à-dire s'étendant, juste en dessous de son couvercle, entre les deux bords latéraux de celle-ci pour en maintenir l'écartement, lesdites entretoises étant constituées d'une pièce profilée (1) déformable élastiquement et de forme générale allongée, caractérisé en ce que ladite pièce profilée a une base (2) relativement plane et porte à proximité de chacune de ses extrémités, d'une part une paire d'ailettes latérales se faisant face (3) et s'étendant pratiquement à angle droit par rapport au plan général (2) de l'entretoise, d'un seul côté par rapport à ce plan, et d'autre part deux pattes (4), en bout d'entretoise, situées dans le prolongement l'une de l'autre et portant extérieurement lesdites saillies (7), lesquelles s'étendent globalement dans une direction perpendiculaire aux plans desdites ailettes (3), chaque ailette latérale (3) de l'entretoise (1) étant séparée de la patte (4) adjacente par une encoche (8) propre à chevaucher le bord extérieur de l'entaille correspondante (18) du bord latéral de la goulotte (12) lorsque la patte (4) et sa saillie (7) y sont introduites, l'extrémité de l'ailette (3) bordant cette encoche (8) constituant ainsi butée sur la goulotte.

2. Dispositif selon la revendication 1, caractérisé en ce qu'entre lesdites ailettes latérales (3), l'entretoise (1) présente dans sa base (2) une zone d'affaiblissement (9) facilitant le pliage ou flexion de cette extrémité selon un axe longitudinal, sous l'effet d'un pincement desdites ailettes (3).

3. Dispositif selon la revendication 2, caractérisé en ce que cette zone d'affaiblissement (9) est constituée par un amincissement localisé de ladite base (2) de l'entretoise (1).

4. Dispositif selon la revendication 2, caractérisé en ce que cette zone d'affaiblissement est obtenue par des trous (11) traversant la base (2) de l'entretoise (1).

## Claims

1. Detachable apparatus for reinforcing cableways or trunking intended to contain electrical conductors, in particular for trunking in the form of a channel closed by a removable lid, the inside edges of the side walls (14) of the channel (12) providing tubular members (16) on which are formed apertures or slots (18) at spaced locations, these slots being intended to receive in a snap-fit side projections (7) provided on the ends of cross-members (1) which bridge the trunking by extending, immediately beneath the lid, between the two side edges to keep them apart, the cross members comprising a shaped piece (1) which is elastically deformable and generally elongate in form, characterised in that said profiled piece has a relatively plane base (2) and carries at each of its two end portions on the one hand a pair of confronting lateral flanges (3) extending substantially at right-angles relative to the general plane (2) of the cross-member and extending from one side only of the plane and, on the other hand, two lugs (4) provided on the end of the cross member and both continuous therewith, said lugs carrying said projections (7) on their outside surface and extending in bulk in a direction perpendicular to the planes of said flanges 3, each lateral flange (3) of the cross member (1) being separated from the adjacent lug (4) by a notch (8) adapted to be received astride the external edges of the corresponding slot (18) of the side edge of the channel (12) when the lug (4) and its projection (7) are introduced therein, the end of the flange (3) bordering on the notch (8) comprising a thrust surface on the trunking.

2. Apparatus according to claim 1, characterised in that between the said lateral flanges (3), the cross member (1) is provided in its base (2) with a weakened zone (9) which enables bending or flexing of each end about a longitudinal axis, effected by a squeezing action on said flanges (3).

3. Apparatus according to claim 2, characterised in that the weakened zone is comprised by a localised thinner area of sail base (2) of the cross-member (1).

4. Apparatus according to claim 2, characterised in that the weakened zone is achieved by the provision of holes (11) across the base (2) of the cross member (1).

## Patentansprüche

1. Abnehmbare Versteifungsvorrichtung für Kabelwege oder Wannen zur Aufnahme von elektrischen Leitern, insbesondere von Wannen, die aus einem kanalförmigen Profilträger bestehen und durch einen abnehmbaren Deckel verschlossen sind, wobei die inneren Ränder der beiden Seitenwände (14) dieses Kanals (12) rohrförmige Elemente (16) aufweisen, an denen in Abständen verteilte Öffnungen oder Einschnitte (18) ausgebildet sind, die durch Einrasten seitliche Vorsprünge (7) aufnehmen, die endseitig an Querstreben (1) vorgesehen sind, die die Wanne überbrücken, das heißt sich unmittelbar unter dem Deckel der Wanne zwischen dessen beiden seitlichen Rändern erstrecken, um deren Abstand aufrechtzuerhalten, wobei die Querstreben aus einem elastisch verformbaren und im allgemeinen langgestreckten Profilteil (1) bestehen, dadurch gekennzeichnet, daß das Profilteil eine verhältnismäßig ebene Basis (2) hat und in Nähe jedes seiner Enden trägt : einerseits ein Paar von seitlichen Stegen (3), die einander zugewandt sind und sich praktisch im rechten Winkel zur Gesamtebene (2) der Querstrebe erstrecken, und zwar bezüglich dieser Ebene auf einer einzigen Seite, und andererseits am Querstrebenende zwei Klauen (4), die in ihrer gegenseitigen Verlängerung angeordnet sind und außen die Vorsprünge (7) tragen, die sich etwa senkrecht zu den Ebenen der Stege (3) erstrecken, wobei jeder seitliche Steg (3) der Querstrebe (1) von der angrenzenden Klaue (4) durch eine Kerbe (8) getrennt ist, die den äußeren Rand des entsprechenden Einschnitts (18) des seitlichen Randes des Wanne (12) umgreifen kann, wenn die Klaue (4) und der Vorsprung (7) dort eingeführt sind, wobei das an diese Kerbe (8) angrenzende Ende des Stegs (3) auf diese Weise einen Anschlag an der Wanne bildet.

2. Vorrichtung nach Anspruch 1, dadurch gekennzeichnet, daß die Querstrebe (1) zwischen den seitlichen Stegen (3) in ihrer Basis (2) eine Schwächungszone aufweist, die das Falten oder Biegen dieses Endes längs einer Längsachse unter der Wirkung eines Klemmens der Stege (3) erleichtert.

3. Vorrichtung nach Anspruch 2, dadurch gekennzeichnet, daß die Schwächungszone (9) durch eine örtliche Verdünnung der Basis (2) der Querstrebe (1) gebildet ist.

4. Vorrichtung nach Anspruch 2, dadurch gekennzeichnet, daß diese Schwächungszone durch die Basis (2) der Querstrebe (1) durchquerende Löcher (11) erzielt ist.

FIG.1

FIG. 2

FIG.3

FIG. 5

FIG. 4

FIG. 6

FIG. 7

FIG. 8